# EUROPEAN PATENT APPLICATION

(11) **EP 2 840 487 A1**
(43) Date of publication of application: **25.02.2015**
(21) Application number: 14170597.0
(22) Date of filing: 30.05.2014
(51) Int. Cl.: G06F 9/44

(54) **Systems, methods, and software to present human machine interfaces on a mobile device**

(30) Priority: 31.05.2013 US 201361829594 P
(71) Applicant: Rockwell Automation Technologies, Inc., Mayfield Heights, OH 44124 (US)
(72) Inventor: Billi, Sharon M., Euclid Ohio 44132 (US); Carrara, Anthony, Strongsville Ohio 44136 (US); Pantaleano, Michael, Willoughby Ohio 44094 (US); Miller, Scott A., Oakdale Pennsylvania 15071 (US)
(74) Representative: Grünecker, Kinkeldey, Stockmair & Schwanhäusser

(57) **Abstract**

A Human Machine Interface (HMI) system to present HMIs on mobile devices. Graphical HMIs are created in an editor application. The graphical HMIs are published and transferred to a server. To ease viewing of the graphical HMIs on mobile devices, the graphical HMIs are mobilized. A content conversion node analyzes components of an initial HMI to identify the components suitable for display on a mobile device. The content conversion node generates a mobile HMI on the identified components. The content conversion node transfers the HMI for delivery to a server.

## Description

### RELATED APPLICATIONS

This application hereby claims the benefit of and priority to U.S. Provisional Patent Application Number 61/829,594, titled "SYSTEMS, METHODS, AND SOFTWARE TO PRESENT HUMAN MACHINE INTERFACES ON A MOBILE DEVICE," filed on May 31, 2013, and which is hereby incorporated by reference in its entirety.

### TECHNICAL FIELD

Aspects of the disclosure are related to the field of industrial automation, and in particular, to software, systems, and methods for presenting human machine interfaces on mobile devices for industrial automation devices and equipment.

### TECHNICAL BACKGROUND

Industrial automation environments can include various machine systems, industrial automation devices, and industrial processes, such as those found in factories, milling operations, manufacturing facilities, and the like. These machine systems and industrial automation devices typically include an operation or process implemented by a mechanical or electrical device. Specific examples of these devices and systems can include various functions of machinery associated with industrial automation including manufacturing equipment, assembly equipment, milling equipment, process equipment, and packaging equipment, or other machine systems.

Various types of software and user applications have been developed to monitor and control the operations of these industrial automation devices, processes, equipment, and systems. This software can include human machine interface (HMI) software and systems, which provide textual and graphical representations of the industrial automation equipment. The HMI software and systems can be developed in a graphical editor or design environment, such as Rockwell Automation" FactoryTalk View" Site Edition (View SE) or other graphical editors. The output of these graphical editors can include various graphical representations, such as HMIs including functional schematics, flow diagrams, process status indicators, and other graphical user interface elements that represent the status, operations, alerts, and other information related to the industrial automation device and associated equipment.

However, these HMIs are typically created for use on non-mobile user devices, such as personal computers, workstations, web terminals, and the like. Displaying the information included in the HMIs on other devices, such as mobile devices, tablet devices, smart phones, and the like, typically requires the user to manually create separate mobile device HMI in addition to the non-mobile graphical representations.

### OVERVIEW

A Human Machine Interface (HMI) system to present HMIs on mobile devices. Graphical HMIs are created in an editor application. The graphical HMIs are published and transferred to a server. To ease viewing of the graphical HMIs on mobile devices, the graphical 1-IMIs are mobilized. A content conversion node analyzes components of an initial HMI to identify the components suitable for display on a mobile device. The content conversion node generates a mobile HMI based on the identified components. The content conversion node transfers the mobile HMI for delivery to a server.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates a Human Machine Interface (HMI) system to present HMIs on mobile devices.
Figure 2 illustrates the operation of the HMI system to present HMIs on mobile devices.
Figure 3 illustrates the operation of a content conversion node to present HMIs on mobile devices.
Figure 4 illustrates an example of a graphical HMI converted to a mobile HMI
Figure 5 illustrates an example of a login screen for the mobile HMI.
Figure 6 illustrates an example of a setup screen for the mobile HMI.
Figure 7 illustrates an example of a menu screen for the mobile HTMI
Figure 8 illustrates an example of a machine system menu screen for the mobile HMI.
Figure 9 illustrates an example of an alarm screen for the mobile HMI.
Figure 10 illustrates another example of another alarm screen for the mobile HMI.
Figure 11 illustrates an example of an in-app notification for the mobile HMI.
Figure 12 illustrates an example of the share data functionality of the mobile HMI
Figure 13 illustrates an example of a message screen for the mobile HMI.
Figure 14 illustrates an example of the control information screen for the mobile HMI
Figure 15 illustrates another example of the control information functionality of the mobile HMI.
Figure 16 illustrates an example of an admin console to manage screens for mobilization.
Figure 17 illustrates an example of the admin console to manage device access for mobile HMIs.
Figure 18 illustrates an example of the admin console to manage navigation for mobile HMIs.
Figure 19 illustrates an example of the display type functionality of the mobile HMI.
Figure 20 illustrates an example of a content conversion node to generate mobile HMIs for display on mobile devices.
Figure 21 illustrates an examples of a computing system that can be used as an admin console.
Figure 22 illustrates an example of a mobile device that runs the mobile app.

### DETAILED DESCRIPTION

The human machine interface (HMI) content conversion node automatically converts graphical HMIs created for use on non-mobile user devices, such as personal computers, workstations, web terminals, to mobile HMIs suitable for display on mobile devices such as, tablet devices, smart phones. The HMI content conversion node automatically generates mobile-friendly HMIs by taking existing content and instructions used to generate the graphical HMIs.

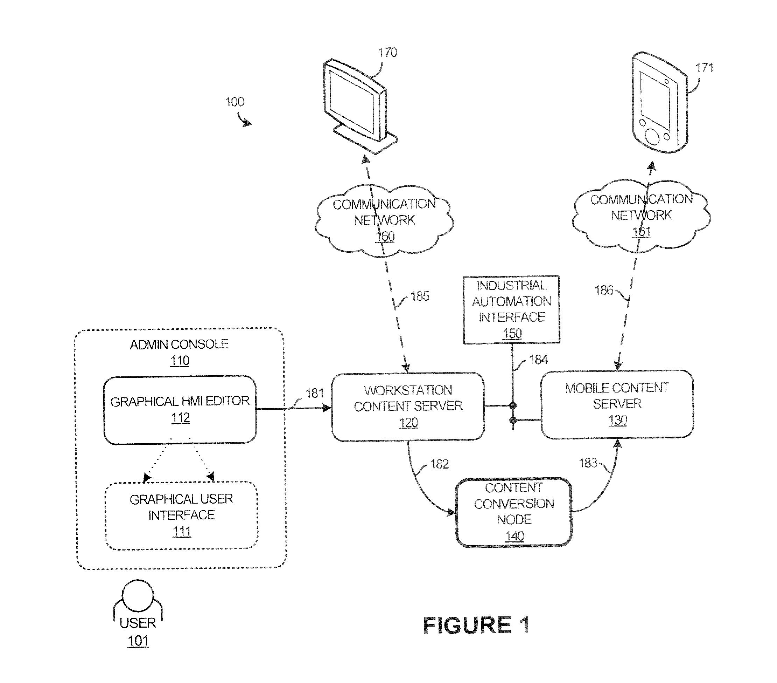

Figure 1 is a system diagram illustrating human machine interface (HMI) system 100. System 100 includes admin console 110, workstation content server 120, mobile content server 130, content conversion node 140, industrial automation interface 150, communication networks 160-161, workstation device 170, and mobile device 171. Although, shown as separate entities, content conversion node 140 and industrial automation interface 150 may be located in a single device or distributed across multiple devices or systems. Admin console 110 includes graphical user interface 111 and graphical HMI editor 112 and is operated by user 101.

Examples of communication network 160 includes Wide Area Networks (WANs), Local Area Networks (LANs), Personal Area Networks (PANs), Metropolitan Area Networks (MANs), or some other type of communication network. Examples of communication network 161 includes wireless communication networks using protocols, such as Long Term Evolution (LTE), Evolution Data Optimized (EVDO), Code Division Multiple Access (CDMA), Global System for Mobile communication systems (GSM), High Speed Packet Access (HSPA), Wireless Fidelity (WIFI), Worldwide Interoperability for Microwave Access (WiMAX), and the like. In some examples communication network 160 and communication network 161 may comprise a single communication network.

Graphical HMI editor 112 and workstation content server 120 communicate over link 181. Workstation content server 120 and content conversion node 140 communicate over link 182. Mobile content server 130 and content conversion node 140 communicate over link 183. Workstation content server 120, mobile content server 130, and industrial automation interface 150 communicate over network link 184. Workstation content server 120 and workstation device 170 communicate over packet link 185. Mobile content server 130 and mobile device 171 communicate over packet link 186.

In operation, graphical HMIs are created on graphical HMI editor 112 on admin console 110. For example, the graphical HMI may be created using Rockwell Automation® FactoryTalk View" Site Edition software. The graphical HMIs are published and transferred to workstation content server 120. After the graphical HMI has been published, the user/administrator may convert or mobilize the graphical HMI to generate a mobile HMI.

In some examples, the graphical HMI may automatically be converted without action by a user/administrator. For instance, a user accessing the mobile phone app on a mobile device may request a machine that has an associated graphical HMI but no corresponding mobile HMI. Content conversion node 140 will automatically convert the graphical HMI into a mobile HMI for display on the Mobile device. In other examples, the mobile app may provide the user with a list of HMIs (both graphical and mobile), if the user selects a graphical HMI, content conversion node 140 will automatically convert the graphical HMI into a mobile HMI for display on the mobile device.

Content conversion node 140 analyzes components of an initial HMI to identify the components suitable for display on mobile device 171. Content conversion node 140 generates a mobile HMI based on the identified components. In some examples, a user selects which components to convert or mobilize. Content conversion node 140 transfers the mobile HMI for delivery to mobile content server 130. In some examples, a user may log in to the mobile phone app and manually add a machine system; in this case, the Mobile HMI is generated based on the machine system status data of the added/requested machine system.

Mobile device 171 requests the mobile HMI from mobile content server 130 over communication network 161. Mobile content server 130 transfers the mobile HMI to mobile device 171 over communication network 161. Examples of mobile device 171 includes wireless communication devices such as a telephone, cellular phone, mobile phone, smartphone, Personal Digital Assistant (PDA), eReader, tablet, mobile Internet appliance, or some other mobile device - including combinations thereof.

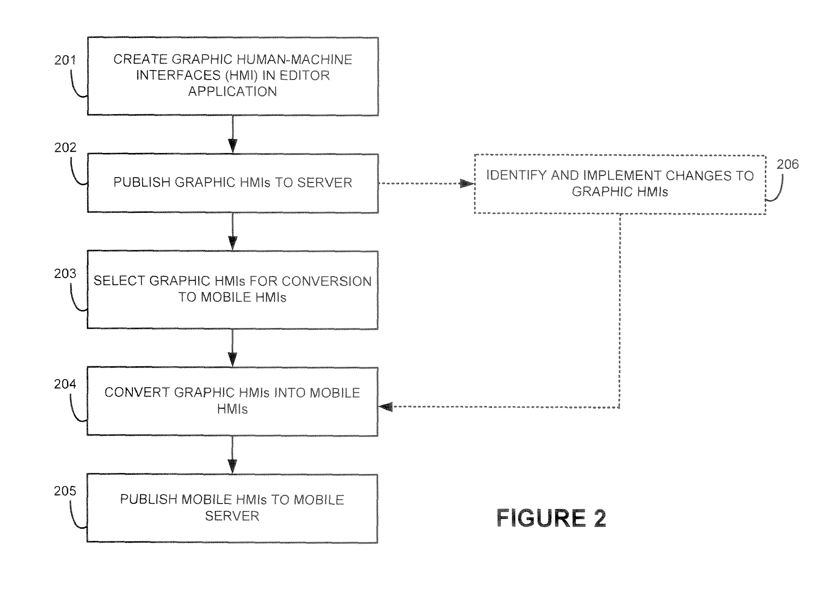

As an example method of operation of system 100, Figure 2 is provided. Figure 2 is a flow diagram illustrating a method of operation of human machine interface system 100. The operations of Figure 2 are referenced below parenthetically. In Figure 2, Graphical HMI editor 112 creates (201) graphical human-machine interface (HMI) screens in an editor application, presented over graphical user interface 111. User 101 can interact with elements of graphical user interface 111 to establish various graphical HMIs related to the operation and control of various industrial automation processes, machine systems, and other equipment. The graphical HMIs are created for use by an end user device, such as workstation device 170, in a graphical interface. The graphical interface of workstation device 170 can include an application, web browser, and the like for displaying the HMIs to a user.

Graphical user interface 111 can include a graphical editor or design environment, such as Rockwell Automation^{®} FactoryTalk View^{®} Site Edition (View SE) or other graphical editors. The output of these graphical editors can include various graphical representations, such as functional schematics, graphical flow diagrams, process flow representations, and other graphical user interface elements that represent the status, operations, alerts, and other information related to the industrial automation device and associated equipment.

Once the graphical HMIs are created, graphical HMI editor 112 publishes (202) the graphical HMIs to workstation content server 120. The publishing process can include transferring a binary or other format of the graphical HMIs for delivery to and storage on workstation content server 120. In some examples, publishing the graphical HMI is done using Rockwell Automation^{®} FactoryTalk^{®} ViewPoint. Workstation content server 120 provides graphical HMIs and related information for delivery to workstation devices over packet networks, such as workstation device 170 over communication network 160. Workstation content server 120 also receives and processes industrial automation status and control information. The status and control information can be received from user devices, such as workstation device 170, or from industrial automation interface 150. Workstation content server 120 can integrate the status and control information into animated graphical HMI views that indicate industrial automation equipment status, process status, control information alerts, stoppage information, errors, damage information, alarms, notifications, or other equipment status and information. Workstation content server 120 can receive control information from workstation device 170 to control the operation of industrial automation equipment and processes. The control information can be delivered by workstation content server 120 to industrial automation interface 150 over network link 184.

If one or more of the graphical HMIs are desired for use on a mobile device, the one or more of the graphical HMI stored on workstation content server 120 are selected (203) for conversion to mobile HMIs. For instance, a user or administrator may select certain graphical HMI for conversion or mobilization. In other examples, Content conversion node 140 automatically selects graphical HMI for conversion or mobilization. For example, a user on a mobile device may select a graphical HMI, the graphically HMI will automatically be mobilized without user operation.

The mobile HMIs can comprise tabular, textual, or other representations for display on a mobile device, such as a mobile smartphone, tablet device, and the like. The mobile HMIs can include a subset of the information presented in the workstation HMIs and are presented in a non-graphical format, such as tabular or textual formats instead of a graphical format. The graphical format typically comprises a pictorial or schematic view of an industrial process, machine system, or other equipment. The non-graphical format typically includes a hierarchical, list, or tabular format indicating textual labels and corresponding values or statuses.

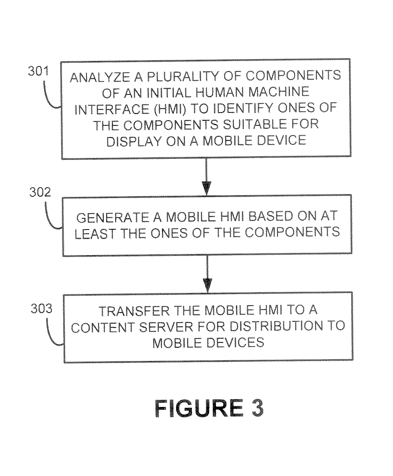

The one or more graphical HMIs can be transferred over link 182 for delivery to content conversion node 140. Content conversion node 140 converts (204) graphical workstation HMIs into mobile HMIs. The conversion process is described in further detail in Figure 3. However, in some examples, the conversion process can include analyzing a plurality of components of an initial HMI, such as one of the graphical HMIs, to identify ones of the components suitable for display on a mobile device, and then generating a mobile HMI based on at least the ones of the components. The components can include graphical elements for representing the various information, processes, machine systems, and the like, found in the graphical HMI. In some examples, the file format used for the graphical HMIs is different than the file format used for the mobile HMIs. For example, the graphical HMIs can be in a graphical binary format and rendered in an application for display on workstation device 170, while the mobile HMIs can be in a tabular format suitable for a custom application or app executed on mobile device 171.

After the mobile HMIs have been generated, content conversion node 140 publishes (205) mobile HMIs to mobile content server 130. The publishing process can include transferring the mobile HMIs for delivery to and storage on mobile content server 130. Mobile content server 130 provides mobile HMIs and related information for delivery to mobile devices over packet networks, such as mobile device 171 over communication network 161. Mobile content server 130 also receives and processes industrial automation status and control information. The status and control information can be received from user devices, such as mobile device 171, or from industrial automation interface 150. Mobile content server 130 can integrate the status and control information into tabular mobile HMIs indicating real-time industrial automation equipment status, machine system status, process status, control information, control information alerts, stoppage information, errors, damage information, alarms, notifications, or other equipment status and information. Mobile content server 130 can receive control information from mobile device 171 to control the operation of industrial automation equipment and processes. The control information can be delivered by mobile content server 130 to industrial automation interface 150 over network link 184,

After the mobile HMIs have been generated and published, changes to the non-mobile or graphical HMIs can be identified (206). These changes can be identified by a user, such as via graphical user interface 111 to modify or alter an existing graphical HMI. Once these changes are published to workstation content server 120, such as done in operation 202, these changes are propagated automatically into mobile HMIs for storage on mobile content server 130.

Content conversion node 140 identifies the changes based on the graphical HMIs stored in workstation content server 120. The changes can be identified by version numbers, file dates, or by explicit instruction during storage of updated graphical HMIs. After the changes or updates to the graphical HMI are identified, content conversion node 140 processes the changed or updated graphical HMIs and generates updated mobile HMIs for storage in mobile content server 130. These updated mobile HMIs typically do not require any user input to generate, as the update processing can be based on the previous generation of the original mobile HMIs, such as by using similar generation rules, scripts, or instructions to propagate changes in the graphical HMIs to the mobile HMIs. In some examples, there may be in option in the admin console to "auto-mobilize changed screens," if this option is selected then when changes in the graphical HMI are detected the corresponding mobile HMI will also be automatically updated.

Figure 3 is a flow diagram illustrating a method of operation of content conversion node 140. Figure 3 discusses examples of operations 203-205 in Figure 2, although variations are possible. The operations of Figure 3 are referenced below parenthetically. In Figure 3, content conversion node 140 analyzes (301) a plurality of components of an initial HMI to identify ones of the components suitable for display on a mobile device. The initial HMI can be a graphical HMI in a first file format, such as a GFX format of the View SE software. This GFX format can be exported into another format, such as an extensible markup language (XML) format which represents the graphical GFX format in an XML format. The XML format is processed by content conversion node 140, such as by a parsing, scrubbing, or combing process, to identify components in the XML format which are suitable for a mobile HMI.

The processing of the initial graphical HMI can include identifying one or more components in the initial HMI that correspond to one or more machine system states displayable in a tabular or textual format on mobile devices. These components can be identified based on patterns that translate into mobile tabular views of machine system states, such as min/max, fullness level, start/stop, temperature, vibration, status, valve open/close, switch status, completion, process interruption, alerts, and other information related to states of processes and machine systems. These patterns of indicators can then be translated into entries for a tabular format. For example, if a min/max component is identified in the graphical format, then a textual entry for min/max can be established. Likewise, if a valve open/close indicator is included in the graphical format, then a textual entry for the valve open/close can be established. Thus, a textual representation of one or more of the graphical elements from the initial graphical HMI can be established.

A user can also interact with content conversion node 140 to establish the mobile HMI or to analyze the graphical HMI. Various components of the graphical HMI can be automatically identified by content conversion node 140, and a user can then parse the various components to select ones of the components for inclusion in a mobile HMI. Moreover, the user can identify errors or faults in the conversion process and establish rules or scripts which are used to correctly translate the initial HMI into the mobile HMI. A preview of the mobile HMI can be established by content conversion node 140 and a user can select or omit various components from the mobile view. A user can also edit textual labels, include further components manually, or otherwise alter the previewed mobile HMI via a user interface of content conversion node 140.

Content conversion node 140 generates (302) a mobile HMI based on at least the ones of the components. Once the various components are determined from the graphical HMI, these components are assembled into a tabular format which comprises the mobile HMI. In further examples, a hierarchical format for the components can be established. Typically, the XML and graphical formats do not include hierarchical information to establish a tabular or list suitable for a mobile HMI. Thus, the graphical HMI is processed to establish a hierarchy for the tabular format. The hierarchy can include a series of lists and sub-lists of the various components, organized or arranged based on function, component type, machine system, industrial process, piece of equipment, or other hierarchical arrangements. These hierarchical arrangements of the tabular components are established based on the graphical views of the initial graphical HMI.

Content conversion node 140 transfers (303) the mobile HMI to a content server for distribution to mobile devices. The transfer of the mobile HMI can include publishing the mobile HMI for delivery to and storage on mobile content server 130, as discussed in operation 205 of Figure 2.

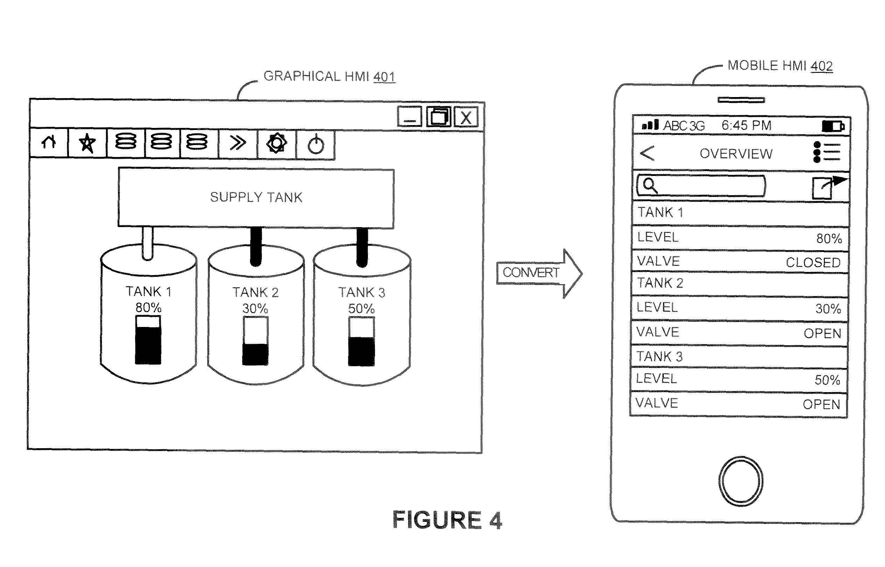

Figure 4 illustrates an example of a graphical HMI, 401 converted to a mobile HMI 402. Machine system status data is provided in a text format suitable for viewing on a mobile device. Mobile HMI 402 provides real-time machine system status data in tabular or textual format to mobile users. Graphical HMI 401 includes three tanks (1-3) with valves connecting the tanks to supply tank. Each tank (1-3) has a graphical indication of the level. Tank 1: 80%, tank: 2 30%, and tank 3: 50%. Graphical HMI, 401 also shows graphical indication of the status of the attached valves. Tank 1: closed, tank 2: open, and tank 3: open. Mobile HMI 402 shows the tank levels and valves statuses in textual format. In some examples, the navigation bar located across the top of graphical HMI 401 may also be converted to generate the "Menu" screen in mobile HMI 402.

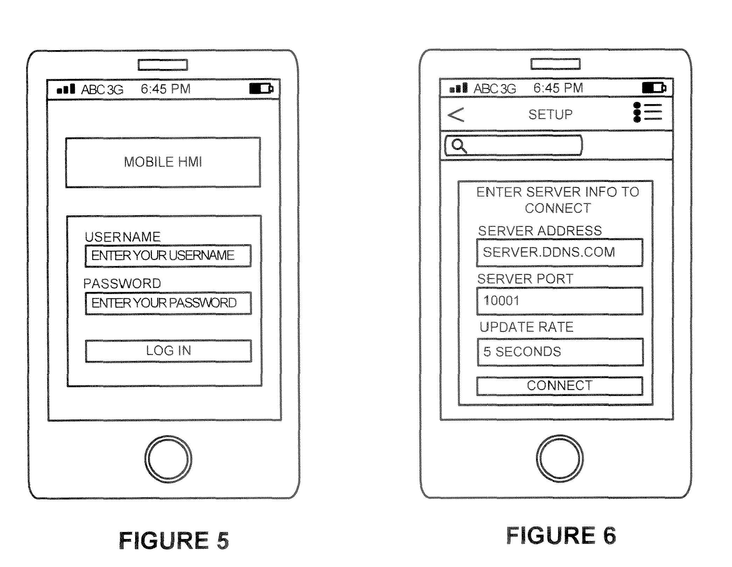

Figure 5 illustrates an example of a "Log in" screen for the mobile HMI, although the mobile HMI may use alternative operations and configurations. The user enters his or her credentials (i.e. username and password) and selects "Log In." Once the user has been authenticated, the user will be presented with the "Home" screen. In some examples, the user and device may be authorized through the admin console and the user will not be asked for a username and password, but will be presented with the "Home" screen after authentication is completed. The "Home" screen may either be set by an administrator at the time the mobile HMI is generated or by the user after the user logs in to the phone app.

Figure 6 illustrates an example of a setup screen for the mobile HMI, although the mobile HMI may use alternative operations and configurations. When a user logs in to the mobile phone app for the first time, the user will be prompted to setup a connection to a mobile content server. To setup the connection, the user enters the server address, port, and update rate and selects "Connect." The "update rate" indicates the time interval for machine system status data to be refreshed in the mobile phone app.

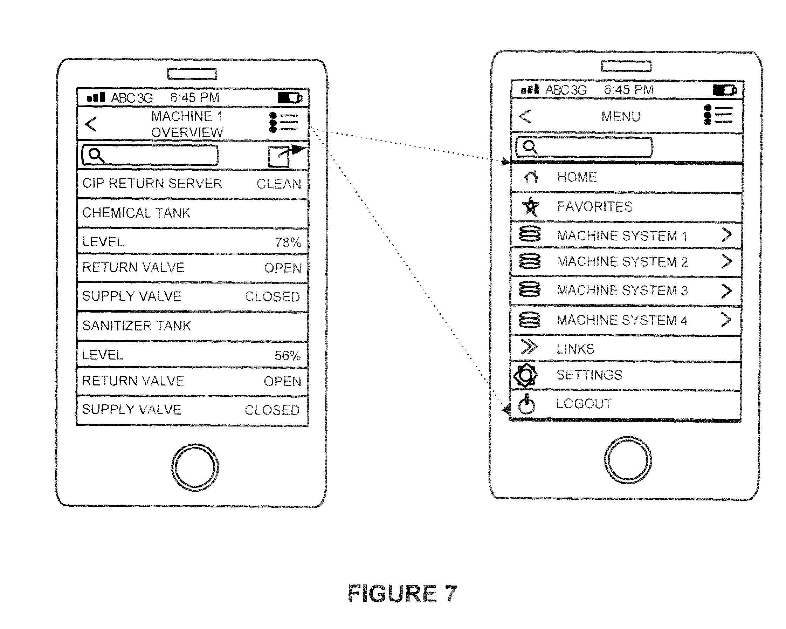

Figure 7 illustrates an example of a menu screen for the mobile HMI, although the mobile HMI may use alternative operations and configurations. The lefthand image is an example of the "Overview" screen for machine system 1. Instead of graphical images, the machine status data is provided to the user in text format. The user sees a list of data items and their values. In this example, Machine 1 has a CIP return server, chemical tank, and sanitizer tank. The CIP return server status is "clean." The chemical tank has data items: level, return valve, and supply valve with data values of 78%, open, and closed, respectively. The sanitizer tank has data items: level, return valve, and supply valve with data values of 56%, open, and closed, respectively. In some examples, the object descriptions of "chemical tank" and "sanitizer tank" may not be available and generic tags such "tank 1" and "tank 2" may be used instead. In some examples, the mobile HMI for machine 1 may have more than one screen, for example, one screen for each major component. To navigate between the different screens associated with machine system 1, the user may swipe left and right.

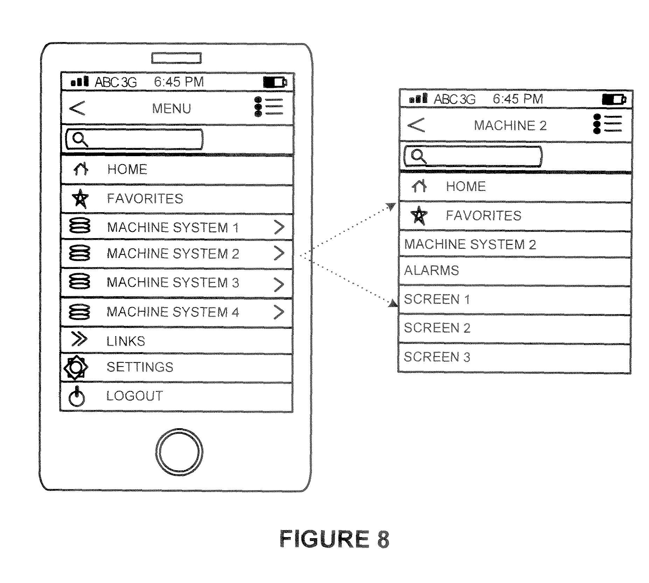

The user may tap the "Menu" icon located in the top right-hand comer under the battery indicator to navigate to other screens within the mobile HMI. The mobile HMI may be configured to receive machine status data from more than one machine system. For example, from the "Menu" screen, the user may select to view the machine status data for machine systems 2 or 3. For examples, if the user selects "Machine 2" from the "Menu'" screen, another list of options will be displayed, an example of which is shown in Figure 8. The user may also use the "Menu" screen to navigate to other screens such as the "Home" and "Favorites'" screens.

It is possible for a graphical or mobile HMI to be accessed by many different users, such as HMI engineer/administration, line supervisor, maintenance engineer, plant engineer, plant IT personnel, management/executive personnel. Therefore, the mobile HMI may be customized to show information important or relevant to the user viewing the mobile HMI based on the user's role and/or location. Although, not required, the graphical or mobile HMI may include a widget that allows the user to view a "smart" or customized displayed for the specific user.

Figure 8 illustrates an example of a machine system menu screen for the mobile HMI, although the mobile HMI may use alternative operations and configurations. When the user selects "machine system 2," another screen listing the different screens associated with machine system 2 is displayed. In this example, there are multiple screens (1-3) associated with machine system 2. The user may select a screen, to view alarms associated with machine system 2, view favorites, or return to the "Home" screen.

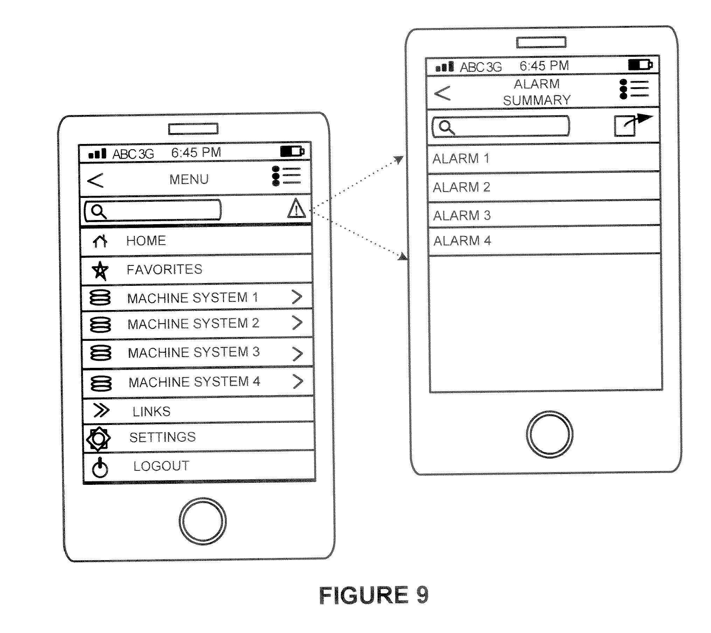

Figure 9 illustrates an example of an alarm screen for the mobile HMI, although the mobile HMI may use alternative operations and configurations. In this example, the "Alarm" icon is displayed in the top right-hand corner below the "Menu" icon. The user may select the "Alarm" icon and be taken to the "Alarm Summary" screen. The "Alarm Summary" screen lists all the alarms. The user may select one of the alarms and a screen with more detailed information for the selected alarm may be displayed. In some examples, the user can swipe left and right to view screens of detailed information for each of the listed alarms. In some examples, the user may receive machine status data, such as alarms, even when the phone app is closed as long as the user is logged in. Although, not required, alarm notification may include providing haptic feedback to the user to notify of alarms, such that even if the mobile device is on silent, the user will be alerted of the alarm.

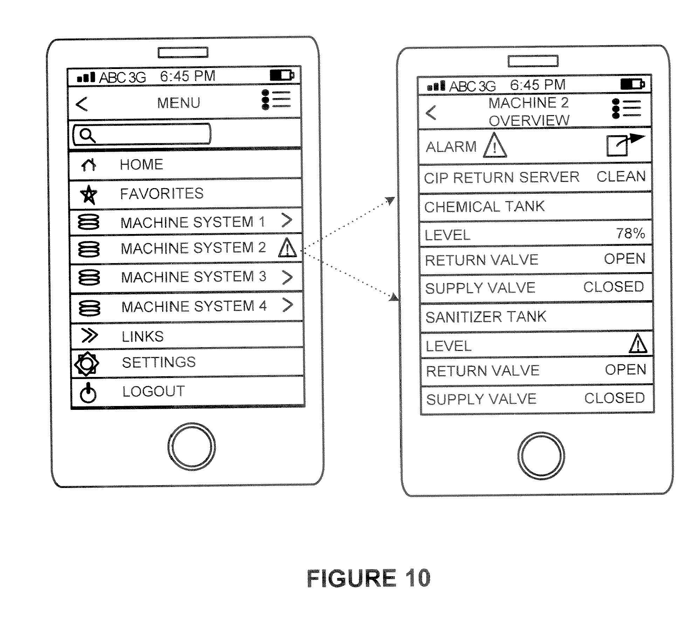

In other examples, the "Alarm"' icon may appear in the "Menu" screen next to the machine system associated with the alarm, as shown in the example of Figure 10, although the mobile HMI may use alternative operations and configurations. When the user taps the "Alarm" icon the "Overview" screen is displayed. In the "Overview" screen for machine 2 the "Alarm" icon appears next to the data item "level" for the sanitizer tank. For example, the sanitizer tank level may drop below a threshold triggering an alarm to be activated. In other examples, an alarm may be triggered when the tank level exceeds a threshold.

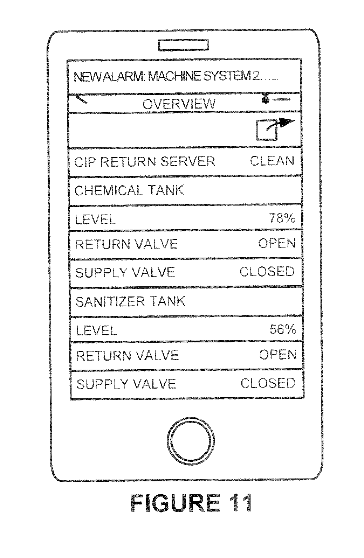

Figure 11 illustrates an example of an in-app notification of events, although the mobile HMI may use alternative operations and configurations. For example, while the user is viewing the "Overview" screen for machine system 1, an alarm for machine system 2 is triggered. The user will be notified of the alarm with an in-app notification message. The in-app notification may also be used to notify the user of events such as limited or no connectivity to the machine system or content server or other information.

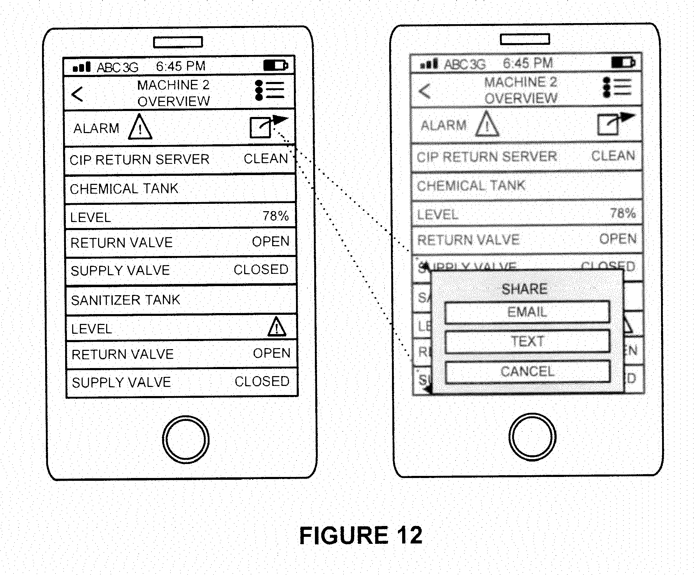

Figure 12 illustrates an example of an "Email/Text" or "Share" functionality of the mobile HMI, although the mobile HMI may use alternative operations and configurations. For example, a machine system operator may wish to email the alarm information to a supervisor. The operator selects the "Email/Text" or "Share" icon located in the top right-hand corner under the "Menu" icon to send the details of the alarm to the other user. The operator user may select to send the information via electronic mail (E-mail) or text message, such as Short Message Service (SMS). The "Email/Text" or "Share" button may be used to share other machine status data.

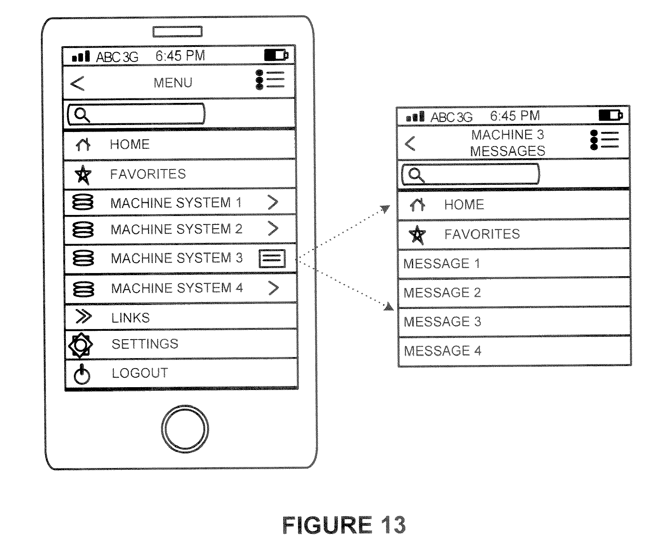

Figure 13 illustrates an example of a message screen for the mobile HMI, although the mobile HMI may use alternative operations and configurations. The "message" icon is displayed next to machine system 3 indicating there are message(s) associated with machine system 3. The user can select a specific message to view a screen with more detailed information.

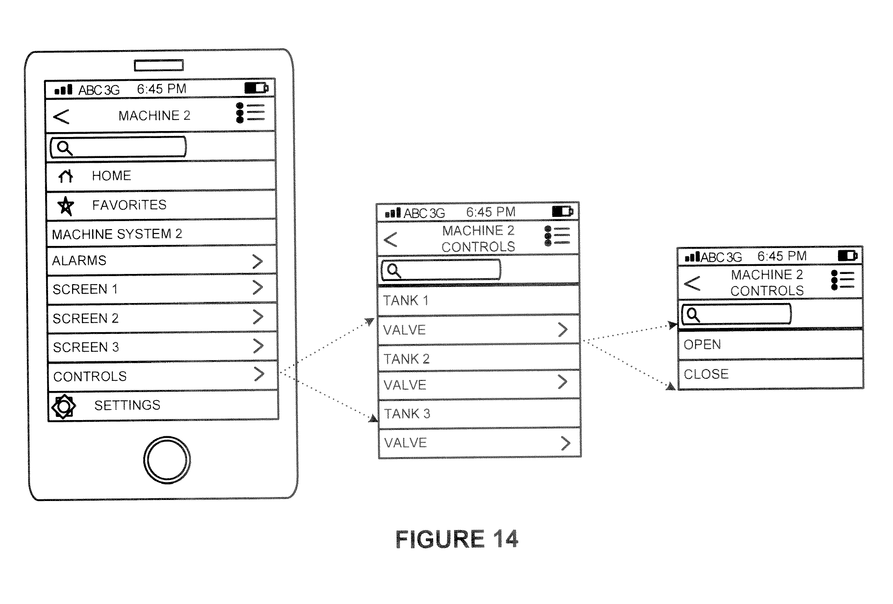

Figure 14 illustrates an example of the control information screen for the mobile HMI, although the mobile HMI may use alternative operations and configurations. The "control information" screen allows the user to send control information to the machine system. For example, the user can open or close the valve on one of the tanks in machine system 2. The user selects the "controls" option and is directed to another screen with all the various systems/objects of machine system 2. For example, machine system 2 may have three tanks. Each tank has a valve that may either be open or closed. The user selects the valve for tank 1 and is directed to other screen where the user may select "open" or "closed" for the valve for tank 1.

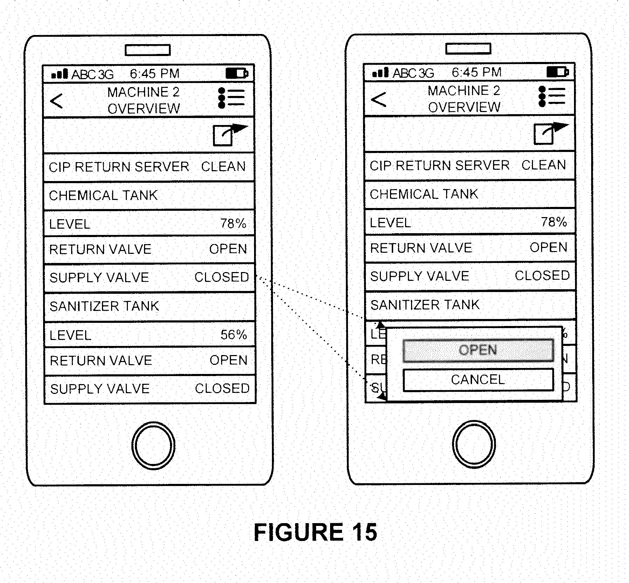

In other examples, the user may control elements of the machine system from the "Overview" screen, an example of which is shown in Figure 15, although the mobile HMI may use alternative operations and configurations. The user selects the supply valve on the chemical tank, which is currently "closed." When the user selects the supply valve on the chemical tank, a pop-up menu is displayed, with the options "open" and "cancel." The user may select "open" to change the supply valve status from "closed" to "open." If the user does not wish to change the status, the user may select "cancel" and there will be no change. The user selects "open" and the control information is transferred for delivery to machine system 2. In some examples, the control information is transferred through mobile content server 130.

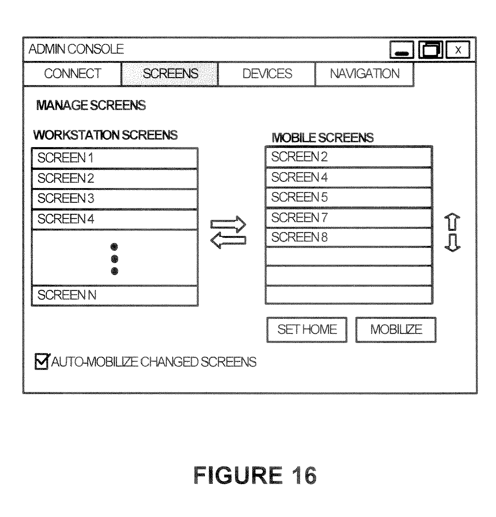

Figure 16 illustrates an example of an admin console to manage screens for mobilization, although the admin console may use alternative operations and configurations. The window on the right lists all the "workstation screens" included in the graphical HMI. The administrator selects which screens to mobilize by highlighting the screen and pressing the right arrow. The administrator may also set the home screen. For example, the administrator selects a screen from the "Mobile Screens" window and then selects the "Set Home" button. The Home screen will be the first screen displayed after the user logs in and sets up the mobile HMI mobile phone app. Once the administrator has selected all screens to be included in the mobile HMI, she can select the "Mobilize" button to convert the selected workstation screens in the graphical HMI into a mobile HMI. The administrator may also check or select the "Auto-mobilize changed screens" option. If any changes to the graphical HMI are detected, the mobilized screens affected will automatically be updated. Once the HMI/screens are mobilized, the administrator may also be presented with the results of the mobilization. The administrator can remove screens from the mobile HMI by selecting the screen from the left "Mobile Screens" window and hitting the left arrow. The administrator can scroll through the mobilized screens using the up and down arrows located to the right of the "Mobile screens" window.

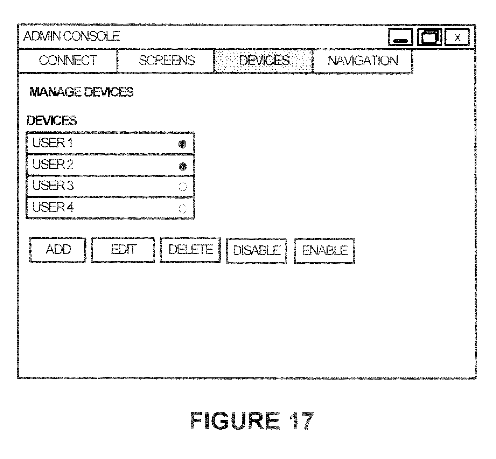

Figure 17 illustrates an example of an admin console to manage device access for mobile HMIs, although the admin console may use alternative operations and configurations. Mobile devices may be authorized to access a mobile HMI using the admin console. In other examples, users will enter their credentials into the mobile phone app at the "Log In" screen in order to gain access to the mobile HMI and the associated machine systems. Devices may be added using a user's name and a device identifier. Examples of device identifiers include the telephone number, phone id no or some other device identifier- including combinations thereof.

Users 1 and 2 are added and enabled as shown by the solid (black) dot next to their names. Users 3 and 4 are added and disabled as shown by the empty (white) dot next to their names. The administrator may select the option to add additional users. The administrator may also remove users/devices. Removed users will no longer be able to access the mobile HMI. Edit user/device information. For example, User 3 may receive a new mobile device, so the device identifier information will need to be updated to reflect the new device's identifier. The administrator may also disable/enable users/devices.

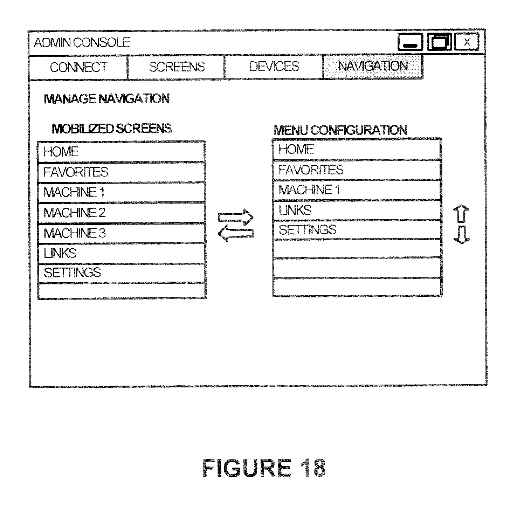

Figure 18 illustrates an example of admin console to manage navigation in mobile HMIs. In some examples, the navigation menu of a graphical HMI will automatically be converted to generate the "Menu" screen in the mobile HMI. The content conversion node may identify and analyze the navigation components of the graphical HMI to generate the navigation or "Menu"' for the mobile HMI. The navigation information used to generate the navigation or "Menu" screen for the mobile HMI may also be based on the user's role and/or location. For example, a user has two different mobile HMIs connected to the mobile phone app. Each mobile HMI is associated with a machine system located in different geographic locations (i.e. different factories). The mobile phone app may only display the mobile HMI of the machine system located in the same location of the user. In other examples, the navigation information may be selected based on the most used navigation information.

In other examples, a user may use the admin console to generate the "Menu" screen in the mobile HMI. As shown in Figure 18, the mobilized screens are shown in the left-hand column. The user may select which screens to include in the "menu" screen in the mobile HMI. The user may further use the up/down arrows to set the order of the "menu" items. Whether the "menu" navigation is automatically or user generated, the user may use the "Navigation" screen in the admin console to make changes to the navigation or "Menu" screen of the mobile HMI.

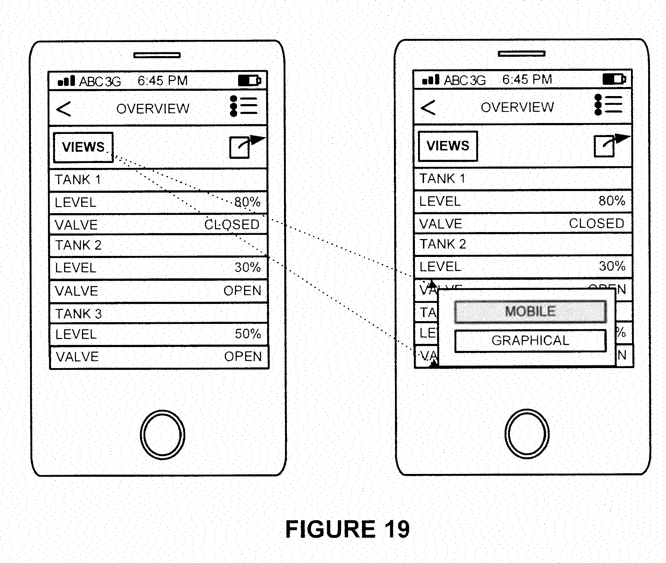

Figure 19 illustrates an example of the display type functionality of the mobile HMI, although the mobile HMI may use alternative operations and configurations. A user may select the "View" button to change views from mobile (text) to graphical. When the "view" button is selected, a pop up menu is displayed. The user can select either "mobile" or "graphical" HMI for display. In some examples, the mobile app will automatically detect the type of device the user is using and select a display based on the device type. For instance, the default display for a smartphone may be the mobile (text) HMI, the default display for a tablet may be a split screen (both text and graphics), and the default display for a laptop/desktop may be the graphical HMI.

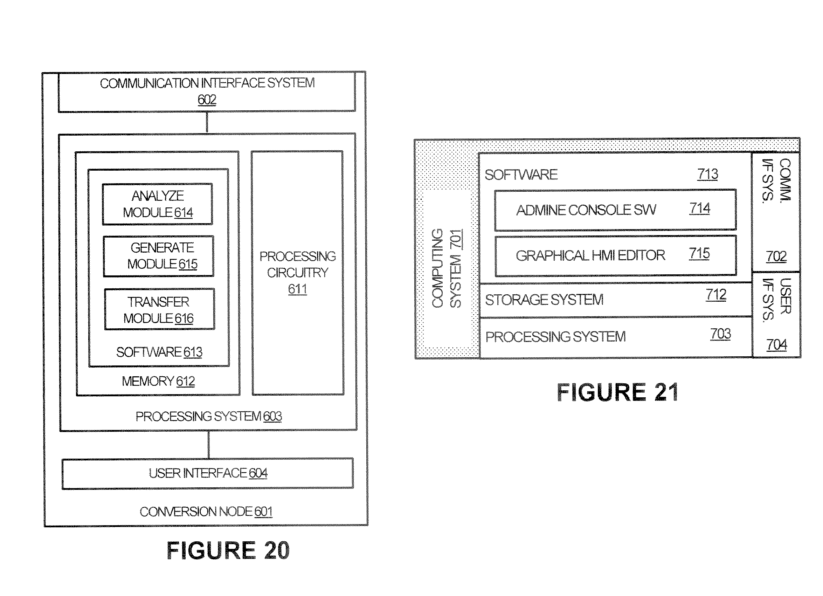

Figure 20 illustrates an example of a content conversion node 601 to generate mobile HMIs for display on mobile devices. Content conversion node 601 is an example of content conversion node 140, although content conversion node 140 could use alternative configurations. Content conversion node 601 comprises communication transceiver system 602, processing system 603, and user interface 604. Processing system 603 is linked to communication transceiver system 602 and user interface 604. Although, user interface 604 could be omitted in some examples. Processing system 603 includes processing circuitry 611 and memory system 612 that stores operating software 613. Software 613 includes analyze module 614, generate module 615, transfer module 616.

Examples of conversion node 601 include computers, server computers, rack servers, web servers, cloud computing platforms, and data center equipment, as well as any other type of physical or virtual server machine, and any variation or combination thereof. In some implementations, a collection of multiple computing systems may be employed to implement all or portions of conversion node 601, which may be hosted in one or more data centers, virtual data centers, or any other suitable computing facilities.

Conversion node 601 may be implemented as a single apparatus, system, or device or may be implemented in a distributed manner as multiple apparatuses, systems, or devices. Conversion node 601 includes, but is not limited to, communication interface system 602, processing system 603, and user interface 604. In some examples, user interface 604 may be omitted. Processing system 603 is linked to communication interface system 602 and user interface 604. Processing system 603 includes processing circuitry 611 and memory 612 that stores software 613.

Processing system 603 loads and executes software 613 from memory 612. When executed by processing system 603 to implement graphical HMI conversion, software 613 directs processing system 603 to operate as described herein for the various graphical HMI conversions discussed in the foregoing implementations. Conversion node 601 may optionally include additional devices, features, or functionality not discussed for purposes of brevity.

Referring still to Figure 20, processing system 603 may comprise a microprocessor and other circuitry that retrieves and executes software 613 from memory 612. Processing system 603 may be implemented within a single processing device, but may also be distributed across multiple processing devices or sub-systems that cooperate in executing program instructions. Examples of processing system 603 include general purpose central processing units, application specific processors, and logic devices, as well as any other type of processing device, combinations, or variations thereof.

Memory 612 may comprise any computer readable storage media readable by processing system 603 and capable of storing software 613. Memory 612 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations, memory 612 may also include computer readable communication media over which software 613 may be communicated internally or externally. Memory 612 may be implemented as a single storage device but may also be implemented across multiple storage devices or sub-systems co-located or distributed relative to each other. Memory 612 may comprise additional elements, such as a controller, capable of communicating with processing system 603 or possibly other systems.

Software 613 may be implemented in program instructions and among other functions may, when executed by processing system 603, direct processing system 603 to operate as described herein with respect to the various operational scenarios, sequences, and processes. In particular, the program instructions may include various components or modules that cooperate or otherwise interact to carry out the various processes and operational scenarios described herein. The various components or modules may be embodied in compiled or interpreted instructions or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 613 may include additional processes, programs, or components, such as operating system software or other application software. Software 613 may also comprise firmware or some other form of machine-readable processing instructions executable by processing system 603.

In general, software 613 may, when loaded into processing system 603 and executed, transform a suitable apparatus, system, or device (of which conversion node 601 is representative) overall from a general-purpose computing system into a special-purpose computing system customized to facilitate run-time experimentation with user interface configurations as described herein for each implementation. Indeed, encoding software 613 on memory 612 may transform the physical structure of memory 612. The specific transformation of the physical structure may depend on various factors in different implementations of this description. Examples of such factors may include, but are not limited to, the technology used to implement the storage media of memory 612 and whether the computer-storage media are characterized as primary or secondary storage, as well as other factors.

For example, if the computer readable storage media are implemented as semiconductor-based memory, software 613 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

It should be understood that conversion node 601 is generally intended to represent a computing system or systems on which software 613 may be deployed and executed in order to implement graphical HMI content conversion. However, conversion node 601 may also be suitable as any computing system on which software 613 may be staged and from where software 613 may be distributed, transported, downloaded, or otherwise provided to yet another computing system for deployment and execution, or yet additional distribution.

When executed, software 613 directs processing system 603 to operate as described herein to present HMIs on mobile devices. In particular, analyze module 614 directs processing system 603 to analyze components of a graphical HMI to identify components suitable for display on a mobile device. Generate module 615 directs processing system 603 to generate a mobile HMI based on the identified components. Transfer module 616 directs processing system 603 to transfer the mobile HMI for delivery to the mobile content server.

Communication interface system 602 may include communication connections and devices that allow for communication with other computing systems (not shown) over a communication network or collection of networks (not shown). Examples of connections and devices that together allow for inter-system communication may include network interface cards, antennas, power amplitiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between conversion node 601 and any other computing system (not shown) may occur over a communication network or networks and in accordance with various communication protocols, combinations of protocols, or variations thereof. Examples of communication networks over which conversion node 601 may exchange information with other computing systems include intranets, the Internet, local area networks, wide area networks, wireless networks, wired networks, virtual networks, software defined networks, data center buses, computing backplanes, networks, or any combination or variation thereof. The aforementioned communication networks and protocols are well known and need not be discussed at length here. However, some communication protocols that may be used include, but are not limited to, the Internet protocol (IP, IPv4, IPv6, etc.), the transfer control protocol (TCP), and the user datagram protocol (UDP), as well as any other suitable communication protocol, variation, or combination thereof.

In any of the aforementioned examples in which information is exchanged, the exchange of information may occur in accordance with any of a variety of protocols, including FTP (file transfer protocol), HTTP (hypertext transfer protocol), REST (representational state transfer), WebSocket, DOM (Document Object Model), HTML (hypertext markup language), CSS (cascading style sheets), HTML5, XML (extensible markup language), JavaScript, JSON (JavaScript Object Notation), and AJAX (Asynchronous JavaScript and XML), as well as any other suitable protocol, variation, or combination thereof. In some implementations, information may be exchanged in accordance with any of a variety of email protocols, including without limitation POP (Post Office Protocol), IMAP (Internet Message Access Protocol), MAPI (Messaging Application Programming Interface), HTTP mail, or any other suitable email protocol.

User interface system 604 may include a keyboard, a mouse, a voice input device, a touch input device for receiving a touch gesture from a user, a motion input device for detecting non-touch gestures and other motions by a user, and other comparable input devices and associated processing elements capable of receiving user input from a user. Output devices such as a display, speakers, haptic devices, and other types of output devices may also be included in user interface system 604. In some cases, the input and output devices may be combined in a single device, such as a display capable of displaying images and receiving touch gestures. The aforementioned user input and output devices are well known in the art and need not be discussed at length here.

User interface system 604 may also include associated user interface software executable by processing system 603 in support of the various user input and output devices discussed above. Separately or in conjunction with each other and other hardware and software elements, the user interface software and user interface devices may support a graphical user interface, a natural user interface, or any other type of user interface. In addition, user input made with respect to the user interfaces can be input via user interface system 604.

Figure 21 illustrates a computing system 701 that is representative of any apparatus, system, or collections thereof suitable for implementing an admin console to generate mobile HMIs for display on mobile devices. Computing system 701 is an example of admin console 110, although admin console 110 could use alternative configurations. Computing system 701 may be implemented as a single apparatus, system, or device or may be implemented in a distributed manner as multiple apparatuses, systems, or devices. Computing system 701 comprises communication interface system 702 processing system 703, user interface 704, and storage system 712. Processing system 703 is linked to communication interface system 702 and user interface 704. Storage system 712 stores operating software 713. Software 713 includes admin console software 714 and graphical HMI editor 715.

Examples of computing system 701 include server computers, rack servers, web servers, cloud computing platforms, and data center equipment, as well as any other type of physical or virtual server machine, and any variation or combination thereof. In some implementations, a collection of multiple computing systems may be employed to implement all or portions of admin console, which may be hosted in one or more data centers, virtual data centers, or any other suitable computing facilities.

Processing system 703 loads and executes software 713 from storage system 712. When executed by processing system 703 to implement admin console software 714 and graphical HMI editor 715, software 713 directs processing system 703 to operate as described herein for the various graphical HMI conversions discussed in the foregoing implementations. Computing system 701 may optionally include additional devices, features, or functionality not discussed for purposes of brevity.

Referring still to Figure 21, processing system 703 may comprise a microprocessor and other circuitry that retrieves and executes software 713 from storage system 712. Processing system 703 may be implemented within a single processing device, but may also be distributed across multiple processing devices or sub-systems that cooperate in executing program instructions. Examples of processing system 703 include general purpose central processing units, application specific processors, and logic devices, as well as any other type of processing device, combinations, or variations thereof.

Storage system 712 may comprise any computer readable storage media readable by processing system 703 and capable of storing software 713. Storage system 712 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations, storage system 712 may also include computer readable communication media over which software 713 may be communicated internally or externally. Storage system 712 may be implemented as a single storage device but may also be implemented across multiple storage devices or sub-systems co-located or distributed relative to each other. Storage system 712 may comprise additional elements, such as a controller, capable of communicating with processing system 703 or possibly other systems.

Software 713 may be implemented in program instructions and among other functions may, when executed by processing system 703, direct processing system 703 to operate as described herein with respect to the various operational scenarios, sequences, and processes. In particular, the program instructions may include various components or modules that cooperate or otherwise interact to carry out the various processes and operational scenarios described herein. The various components or modules may be embodied in compiled or interpreted instructions or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 713 may include additional processes, programs, or components, such as operating system software or other application software. Software 713 may also comprise firmware or some other form of machine-readable processing instructions executable by processing system 703.

In general, software 713 may, when loaded into processing system 703 and executed, transform a suitable apparatus, system, or device (of which computing system 701 is representative) overall from a general-purpose computing system into a special-purpose computing system customized to facilitate run-time experimentation with user interface configurations as described herein for each implementation. Indeed, encoding software 713 on storage system 712 may transform the physical structure of storage system 712. The specific transformation of the physical structure may depend on various factors in different implementations of this description. Examples of such factors may include, but are not limited to, the technology used to implement the storage media of storage system 712 and whether the computer-storage media are characterized as primary or secondary storage, as well as other factors.

For example, if the computer readable storage media are implemented as semiconductor-based memory, software 713 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

It should be understood that computing system 701 is generally intended to represent a computing system or systems on which software 713 may be deployed and executed in order to implement graphical HMI conversion. However, computing system 701 may also be suitable as any computing system on which software 713 may be staged and from where software 713 may be distributed, transported, downloaded, or otherwise provided to yet another computing system for deployment and execution, or yet additional distribution.

Communication interface system 702 may include communication connections and devices that allow for communication with other computing systems (not shown) over a communication network or collection of networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 701 and any other computing system (not shown) may occur over a communication network or networks and in accordance with various communication protocols, combinations of protocols, or variations thereof. Examples of communication networks over which computing system 701 may exchange information with other computing systems include intranets, the Internet, local area networks, wide area networks, wireless networks, wired networks, virtual networks, software defined networks, data center buses, computing backplanes, networks, or any combination or variation thereof. The aforementioned communication networks and protocols are well known and need not be discussed at length here. However, some communication protocols that may be used include, but are not limited to, the Internet protocol (IP, IPv4, IPv6, etc.), the transfer control protocol (TCP), and the user datagram protocol (UDP), as well as any other suitable communication protocol, variation, or combination thereof.

In any of the aforementioned examples in which information is exchanged, the exchange of information may occur in accordance with any of a variety of protocols, including FTP, HTTP, REST, WebSocket, DOM, HTML, CSS, HTML5, XML, JavaScript, JSON, and AJAX, as well as any other suitable protocol, variation, or combination thereof. In some implementations, information may be exchanged in accordance with any of a variety of email protocols, including without limitation POP, IMAP, MAPI, HTTP mail, or any other suitable email protocol.

User interface system 704 may include a keyboard, a mouse, a voice input device, a touch input device for receiving a touch gesture from a user, a motion input device for detecting non-touch gestures and other motions by a user, and other comparable input devices and associated processing elements capable of receiving user input from a user. Output devices such as a display, speakers, haptic devices, and other types of output devices may also be included in user interface system 704. In some cases, the input and output devices may be combined in a single device, such as a display capable of displaying images and receiving touch gestures. The aforementioned user input and output devices are well known in the art and need not be discussed at length here.

User interface system 704 may also include associated user interface software executable by processing system 703 in support of the various user input and output devices discussed above. Separately or in conjunction with each other and other hardware and software elements, the user interface software and user interface devices may support a graphical user interface, a natural user interface, or any other type of user interface. In addition, user input made with respect to the user interfaces can be input via user interface system 704.

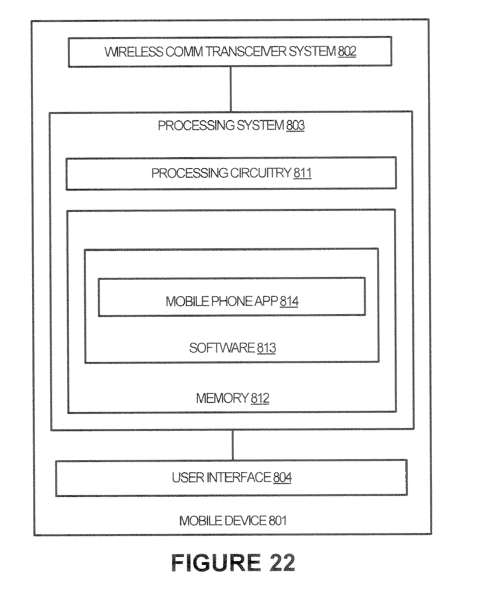

Figure 22 is an example of a mobile device that runs the mobile phone app. Mobile device 801 is an example of mobile device 171, although mobile device 171 could use alternative configurations. Mobile device 801 comprises wireless communication transceiver system 802, processing system 803, and user interface 804. Processing system 803 is linked to wireless communication transceiver system 802 and user interface 804. Processing system 803 includes processing circuitry 811 and memory 812 that stores operating software 813. Software 813 comprises mobile phone app 814.

Mobile device 801 may include other well-known components such as a battery and enclosure that are not shown for clarity. Mobile device 801 may be a telephone, cellular phone, mobile phone, smartphone, personal digital assistant (PDA), tablet, e-book, mobile Internet appliance, wireless network interface card, or some other wireless communication apparatus - including combinations thereof.

Wireless communication transceiver system 802 comprises RF communication circuitry and an antenna. The RF communication circuitry typically includes an amplifier, filter, RF modulator, and signal processing circuitry. Wireless communication transceiver system 802 may also include a memory device, software, processing circuitry, or some other communication device. Wireless communication transceiver system 802 may use various communication formats, such as CDMA, EVDO, WIMAX, GSM, LTE, WIFI, HSPA, or some other wireless communication format - including combinations thereof.

User interface 804 comprises components that interact with a user to receive user inputs and to present media and/or information. User interface 804 may include a speaker, microphone, buttons, lights, display screen, touch screen, touch pad, scroll wheel, communication port, or some other user input/output apparatus - including combinations thereof. User interface 804 may be omitted in some examples.

Processing circuitry 811 comprises microprocessor and other circuitry that retrieves and executes operating software 813 from memory 812. Memory 812 comprises a non-transitory storage medium, such as a disk drive, flash drive, data storage circuitry, or some other memory apparatus. Processing circuitry 811 is typically mounted on a circuit board that may also hold memory 812, portions of wireless communication transceiver system 802, and user interface 804. Operating software 813 comprises computer programs, firmware, or some other form of machine-readable processing instructions. Operating software 813 may include an operating system, utilities, drivers, network interfaces, applications, or some other type of software. When executed by processing circuitry 811, operating software 813 directs processing system 803 to operate mobile device 801 as described herein.

When executed, software 813 directs processing system 803 to operate as described herein to run the mobile phone app and display the mobile HMIs.

Referring back to Figure 1, the further elements of Figure 1 are now discussed in more detail.

Admin console 110 comprises one or more computing devices, such as personal computers, workstation equipment, processing systems, and the like, which can display HMI editor tools, graphical user interface 111, and related information to user 101 of admin console 110. Graphical HMI editor 112 includes communication interfaces for communicating over at least link 181, such as network interface cards, transceivers, routers, and the like. Graphical user interface 111 can include graphical and text-based user input and display elements, such as forms, slider bars, text boxes, buttons, radio buttons, check boxes, windows, icons, and pull-down menus, among other input elements, including combinations or variations thereof. Graphical user interface 111 can be presented in an interactive web page, discrete application, windowing environment, or other graphical environments. Graphical user interface 111 can include a graphical editor or design environment, such as Rockwell Automation^{®} FactoryTalk View^{®} Site Edition (View SE) or other graphical editors. The output of these graphical editors can include various graphical representations, such as functional schematics, flow diagrams, process status indicators, and other graphical user interface elements that represent the status, operations, alerts, and other information related to the industrial automation device and associated equipment.

Workstation content server 120 provides HMIs and related information for delivery to workstation devices over packet networks, such as workstation device 170 over communication network 160. Workstation content server 120 also receives and processes industrial automation status and control information. The status and control information can be received from user devices, such as workstation device 170, or from industrial automation interface 150. Workstation content server 120 can integrate the status and control information into HMI views indicating industrial automation equipment status, process status, control information alerts, stoppage information, errors, damage information, or other equipment status and information. Workstation content server 120 can receive control information from workstations to control the operation of industrial automation equipment and processes. The control information can be delivered by workstation content server 120 to industrial automation interface 150. Workstation content server 120 can include one or more computing devices, each of which comprises communication interfaces, computer systems, microprocessors, circuitry, computer-readable media, or other processing devices or software systems, and which may be distributed among multiple processing devices. Workstation content server 120 can include web server equipment, such as one or more servers to process and deliver Hypertext Markup Language (HTML) and related content. Workstation content server 120 can comprise cloud computing systems. Examples of workstation content server 120 may also include software such as an operating system, logs, utilities, drivers, databases, data structures, networking software, and other software stored on a computer-readable medium. Workstation content server 120 could also include an application server, application service provider system, database system, web server, or other systems.

Mobile content server 130 provides mobile HMIs and related information for delivery to mobile devices over packet networks, such as mobile device 171 over communication network 160. Mobile content server 130 also receives and processes industrial automation status and control information. The status and control information can be received from mobile user devices, such as mobile device 171, or from industrial automation interface 150. Mobile content server 130 can integrate the status and control information into mobile HMI views indicating industrial automation equipment status, process status, control information alerts, stoppage information, errors, damage information, or other equipment status and information. Mobile content server 130 can receive control information from mobile devices to control the operation of industrial automation equipment and processes. The control information can be delivered by mobile content server 130 to industrial automation interface 150. Mobile content server 130 can include one or more computing devices, each of which comprises communication interfaces, computer systems, microprocessors, circuitry, computer-readable media, or other processing devices or software systems, and which may be distributed among multiple processing devices. Mobile content server 130 can include web server equipment, such as one or more servers to process and deliver HTML and related content. Mobile content server 130 can comprise cloud computing systems. Examples of mobile content server 130 may also include software such as an operating system, logs, utilities, drivers, databases, data structures, networking software, and other software stored on a computer-readable medium. Mobile content server 130 could also include an application server, application service provider system, database system, web server, or other systems. In some examples, mobile content server 130 and workstation content server 120 are included in the same equipment or systems.

Industrial automation interface 150 includes equipment and systems to bidirectionally interface industrial automation equipment, systems, and processes to content servers, such as content servers 120 and 130. These industrial automation equipment, systems, and processes typically include an operation or process implemented by a mechanical or electrical device. Specific examples of these devices and systems can include various functions of machinery associated with industrial automation including manufacturing equipment, assembly equipment, milling equipment, process equipment, and packaging equipment, or other machine systems. The industrial automation equipment, systems, and processes typically have various status, process control, alerts, and other information that is provided over various communication interfaces. Industrial automation interface 150 receives this information and transfers it for delivery to content servers 120 and 130.

Industrial automation interface 150 can translate this information into different formats suitable for use in HMIs on content servers 120 and 130. This information can include temperature, vibration, fullness, status, valve open/close, switch status, completion, process interruption, alerts, and other information related to processes and machine systems. Additionally, industrial automation interface 150 can receive user control information originally received at an end user device, such as ones of workstation device 170 and mobile device 171. Industrial automation interface 150 can translate this information into a format suitable for use by industrial process control equipment, power control equipment, power drive equipment, machine systems, and the like. Thus, industrial automation interface 150 can act as an interworking interface between different systems to translate and handle delivery of status and control information to/from the content servers and the industrial automation systems.

Communication networks 160 and 161 include equipment and systems to route packet communications between endpoints using packet-based communication protocols, including Internet protocol (IP) and Ethernet. Communication networks 160 and 161 could comprise routers, switches, gateways, bridges, as well as various network links. Although communication networks 160 and 161 is shown in Figure 1, it should be understood that one or more networks could be included, such as the Internet, local area networks, wide area networks, wireless networks, metropolitan area networks, and point-to-point communication links, among other networks and systems.

Workstation device 170 comprises one or more computing devices, such as personal computers, workstation equipment, processing systems, and the like, which can display graphical HMIs and related information to a user of workstation device 170. Workstation device 170 includes communication interfaces for communicating over at least packet link 185 and communication network 160, such as network interface cards, transceivers, routers, and the like. In some examples, workstation device 170 is non-mobile, such as a desktop computer or desktop workstation. In other examples, workstation device 170 is mobile, such as a laptop or notebook computer. However, the HMIs displayed on workstation device 170 include non-mobile graphical HMIs, such as those provided by workstation content server 120.

Mobile device 171 comprises network interface circuitry, transceiver circuitry, and other communication elements for communicating over at least communication network 161. The transceiver circuitry typically includes amplifiers, filters, modulators, and signal processing circuitry. Mobile device 171 also includes user interface systems, such as graphical user interface systems for displaying mobile HMIs and related information to a user of mobile device 171. Mobile device 171 can comprise memory devices, non-transitory computer-readable storage mediums, software, processing circuitry, or some other communication components. Mobile device 171 can be a wireless communication device, smartphone, personal digital assistant (PDA), computer, tablet device, mobile Internet appliance, or some other wireless communication apparatus, including combinations thereof.

Communication links 181-186 each use metal, glass, optical, air, space, or some other material as the transport media. Communication links 181-186 can each use various communication protocols, such as Internet Protocol (IP), transmission control protocol (TCP), Ethernet, Time Division Multiplex (TDM), asynchronous transfer mode (ATM), synchronous optical networking (SONET), hybrid fiber-coax (HFC), circuit-switched, communication signaling, wireless communications, packet communications, or some other communication format, including combinations, improvements, or variations thereof. Communication links 181-186 can each be a direct link or may include intermediate networks, systems, or devices, and can include a logical network link transported over multiple physical links. Communication links 181-186 can each be wireless local area network communication links, and may use various protocols, such as IEEE 802.11, IEEE 802.15, wireless fidelity (Wi-Fi), Bluetooth, Zigbee, or some other wireless LAN or wireless personal area network (PAN), including combinations, improvements, or variations thereof.

In some examples, link 186 comprises a wireless communication link, and may use various protocols, such as Code Division Multiple Access (CDMA), Evolution-Data Optimized (EVDO), single-carrier radio transmission technology link (1xRTT), Worldwide Interoperability for Microwave Access (WiMAX), Global System for Mobile Communication (GSM), Universal Mobile Telecommunications System (UMTS), Long Term Evolution (LTE), High Speed Packet Access (HSPA), Radio Link Protocol (RLP), IEEE 802.11, IEEE 802.15, wireless fidelity (Wi-Fi), Bluetooth, Zigbee, wireless personal area network (PAN), or some other cellular or wireless communication format, including combinations, improvements, or variations thereof.

Although one main link for each of communication links 181-186 is shown in Figure 1, it should be understood that communication links 181-186 are merely illustrative to show communication modes or communication pathways for the associated elements. In other examples, further links can be shown, with portions of the further links shared and used for different communications or different content types, among other configurations. Communication links 181-186 may each include many different signals sharing the same associated link, as represented by the associated lines in Figure 1, comprising resource blocks, access channels, forward links, reverse links, user communications, communication sessions, overhead communications, frequencies, channels, carriers, timeslots, spreading codes, transportation ports, logical transportation links, network sockets, packets, or communication directions.

The included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of the invention. Those skilled in the art will also appreciate that the features described above can be combined in various ways to form multiple embodiments. As a result, the invention is not limited to the specific embodiments described above, but only by the claims and their equivalents. The following is a list of further preferred embodiments of the invention:
Embodiment 1. A method of operating a human machine interface (HMI) content conversion node, the method comprising:
   analyzing a plurality of components of an initial HMI to identify ones of the components suitable for display on a mobile device;
   generating a mobile HMI based on at least the ones of the components;
   transferring the mobile HMI to a content server for distribution to mobile devices.
Embodiment 2. The method of embodiment 1, further comprising the HMI content conversion node automatically selecting the initial HMI for conversion.
Embodiment 3. The method of embodiment 1, wherein one of the plurality of components of the initial HMI comprises navigation information and generating the mobile HMI based on at least the ones of the components comprises generating the mobile HMI that includes the navigation information.
Embodiment 4. The method of embodiment 1, comprising:
   wherein analyzing the plurality of components of the initial HMI comprises identifying one or more components in the initial HMI that correspond to one or more machine system states displayable in a tabular format on the mobile devices.
Embodiment 5. The method of embodiment 4, comprising:
   wherein generating the mobile HMI comprises displaying at least ones of the components of the initial HMI and their corresponding one or more machine system states in the tabular format.
Embodiment 6. The method of embodiment 1, further comprising:
   updating the mobile HMI when updates to the initial HMI are detected.
Embodiment 7. The method of embodiment 1, comprising:
   wherein analyzing the plurality of components of the initial HMI comprises a user selection of one or more of the components for display on the mobile device.
Embodiment 8. The method of embodiment 1, further comprising:
   receiving a user instruction from the mobile device wherein the mobile HMI is associated with a machine system and the user instruction indicates control information for the machine system.
Embodiment 9. A computer apparatus to operate a human machine interface (HMI) content conversion node, the apparatus comprising:
   software instructions configured, when executed by one or more computing systems, to direct the one or more computing systems to:
      analyze a plurality of components of an initial HMI to identify ones of the components suitable for display on a mobile device;
      generate a mobile HMI based on at least the ones of the components;
      transfer the mobile HMI to a content server for distribution to mobile devices; and
      provide a digital media caching environment; and
   at least one non-transitory computer-readable storage medium storing the software instructions.
Embodiment 10. computer apparatus of embodiment 9 wherein the software instructions configured to analyze the plurality of components of the initial HMI to identify ones of the components suitable for display on the mobile device comprises the software instructions configured to analyze the plurality of components of the initial HMI that correspond to one or more machine system states displayable in a tabular format on the mobile devices.
Embodiment 11. The computer apparatus of embodiment 10 wherein the software instructions configured to generate the mobile HMI based on at least the ones of the components comprises software instructions configured to display the one or more machine system states in the tabular format.
Embodiment 12. The computer apparatus of embodiment 9 wherein the software instructions are further configured to update the mobile HMI when updates to the initial HMI are detected.
Embodiment 13. The computer apparatus of embodiment 9 wherein the software instructions configured to analyze the plurality of components of the initial HMI to identify ones of the components suitable for display on the mobile device comprises the software instructions configured to receive a user selection of ones of the components for display on the mobile devices.
Embodiment 14. The computer apparatus of embodiment 9 wherein the software instructions is configured to receive and process a user instruction transferred from the mobile device wherein the mobile HMI is associated with a machine system and the user instruction indicates control information for the machine system.
Embodiment 15. A communication device configured to interface with a content server, the communication device comprising:
   an input device configured to receive a user selection of a mobile human machine interface (HMI);
   a processing system configured to generate the mobile HMI for display on a user interface;
   the input device configured to receive a user instruction; and
   a communication interface configured to transfer the user instruction for delivery to the content server.
Embodiment 16. The communication device of embodiment 15 wherein the user selection of the mobile HMI comprises selection of the mobile HMI from a list.
Embodiment 17. The communication device of embodiment 15 wherein the processing system is configured to update the mobile HMI with real-time status data for a machine system.
Embodiment 18. The communication device of embodiment 15 wherein the user instruction comprises control information for a machine system.
Embodiment 19. The communication device of embodiment 15 wherein the user instruction comprises an instruction to send machine system data to another user via electronic mail.
Embodiment 20. The communication device of embodiment 15 wherein the user instruction comprises an instruction to send machine system data to another user via text message.

## Claims

1. A method of operating a human machine interface (HMI) content conversion node, the method comprising:
analyzing a plurality of components of an initial HMI to identify ones of the components suitable for display on a mobile device;
generating a mobile HMI based on at least the ones of the components;
transferring the mobile HMI to a content server for distribution to mobile devices.

2. The method of claim 1, further comprising the HMI content conversion node automatically selecting the initial HMI for conversion.

3. The method of any one of claims 1 to 2, wherein one of the plurality of components of the initial HMI comprises navigation information and generating the mobile HMI based on at least the ones of the components comprises generating the mobile HMI that includes the navigation information.

4. The method of any one of claims 1 to 3, comprising:
wherein analyzing the plurality of components of the initial HMI comprises identifying one or more components in the initial HMI that correspond to one or more machine system states displayable in a tabular format on the mobile devices.

5. The method of claim 4, comprising:
wherein generating the mobile HMI comprises displaying at least ones of the components of the initial HMI and their corresponding one or more machine system states in the tabular format.

6. The method of any one of claims 1 to 5, further comprising:
updating the mobile HMI when updates to the initial HMI are detected.

7. The method of any one of claims 1 to 6, comprising:
wherein analyzing the plurality of components of the initial HMI comprises a user selection of one or more of the components for display on the mobile device.

8. The method of any one of claims 1 to 7, further comprising:
receiving a user instruction from the mobile device wherein the mobile HMI is associated with a machine system and the user instruction indicates control information for the machine system.

9. A computer apparatus to operate a human machine interface (HMI) content conversion node, the apparatus comprising:
software instructions configured, when executed by one or more computing systems, to direct the one or more computing systems to:
analyze a plurality of components of an initial HMI to identify ones of the components suitable for display on a mobile device;
generate a mobile HMI based on at least the ones of the components;
transfer the mobile HMI to a content server for distribution to mobile devices; and
provide a digital media caching environment; and
at least one non-transitory computer-readable storage medium storing the software instructions.

10. computer apparatus of claim 9 wherein the software instructions configured to analyze the plurality of components of the initial HMI to identify ones of the components suitable for display on the mobile device comprises the software instructions configured to analyze the plurality of components of the initial HMI that correspond to one or more machine system states displayable in a tabular format on the mobile devices.

11. The computer apparatus of claim 10 wherein the software instructions configured to generate the mobile HMI based on at least the ones of the components comprises software instructions configured to display the one or more machine system states in the tabular format.

12. The computer apparatus of any one of claims 9 to 11 wherein the software instructions are further configured to update the mobile HMI when updates to the initial HMI are detected.

13. The computer apparatus of any one of claims 9 to 12 wherein the software instructions configured to analyze the plurality of components of the initial HMI to identify ones of the components suitable for display on the mobile device comprises the software instructions configured to receive a user selection of ones of the components for display on the mobile devices; or
wherein the software instructions is configured to receive and process a user instruction transferred from the mobile device wherein the mobile HMI is associated with a machine system and the user instruction indicates control information for the machine system.

14. A communication device configured to interface with a content server, the communication device comprising:
an input device configured to receive a user selection of a mobile human machine interface (HMI);
a processing system configured to generate the mobile HMI for display on a user interface;
the input device configured to receive a user instruction; and
a communication interface configured to transfer the user instruction for delivery to the content server.

15. The communication device of claim 15 wherein the user selection of the mobile HMI comprises selection of the mobile HMI from a list; or
wherein the processing system is configured to update the mobile HMI with real-time status data for a machine system; or
wherein the user instruction comprises control information for a machine system; or wherein the user instruction comprises an instruction to send machine system data to another user via electronic mail.; or
wherein the user instruction comprises an instruction to send machine system data to another user via text message.
